# EUROPEAN PATENT APPLICATION

(11) **EP 2 624 615 A1**
(43) Date of publication of application: **07.08.2013**
(21) Application number: 10857665.3
(22) Date of filing: 28.09.2010
(51) Int. Cl.: H04W 16/24

(54) **MICRO BASE STATION, MICRO BASE STATION INTERFERENCE COORDINATION METHOD, AND USER TERMINAL**

(71) Applicant: Fujitsu Limited, Kawasaki-shi, Kanagawa 211-8588 (JP)
(72) Inventor: ZHANG, Yi, Beijing 100025 (CN); ZHANG, Yuantao, Beijing 100025 (CN); LI, Hongchao, Beijing 100025 (CN); ZHOU, Hua, Beijing 100025 (CN); WU, Jianming, Beijing 100025 (CN)
(74) Representative: Stebbing, Timothy Charles
(86) International application number: PCT/CN2010/077401
(87) International publication number: WO 2012/040902

(57) **Abstract**

The present invention relates to a micro base and a micro base station interference coordination method comprising: shifting, relative to subframes in the subframe configuration used in a macro base station, subframes in the subframe configuration used in the micro base station by several subframes, wherein the number of the shifted subframes causes subframes in the subframe configuration used in the micro base station which are corresponding to a specific channel in the subframe configuration used in the macro base station, not to transmit any signal un-allocatable by the micro base station after the shifting; emptying uplink subframes in the subframe configuration used in the micro base station after the shifting, which are corresponding to downlink subframes containing a designated channel in the subframe configuration used in the macro base station; and emptying the subframes in the subframe configuration used in the micro base station after the shifting which are corresponding to the specific channel in the subframe configuration used in the macro base station, or causing portions of the subframes corresponding to the specific channel not to transmit any signal.

## Description

### Field of the Invention

This invention relates to a transmission technology in a communication system, and particularly, to an interference coordination technology in the communication system.

### Background of the Invention

The 3GPP Long Term Evolution (LTE) continues to use the traditional homogeneous network which is constructed by a hexagonal cellular system. In order to further improve the system capacity, the next generation wireless communication system Advanced LTE (LTE-A) introduces the heterogeneous network. The LTE-A system may be composed of a macro cell, a femto cell, a pico cell, a Remote Radio Head (RRH) and a relay. By deploying new wireless nodes, the LTE-A system not only improves the system capacity, but also provides better services to the users of special areas and optimizes the system performance. On the other hand, the deployment of the new nodes causes interferences to the users of the originally deployed cells, and even makes some holes from the coverage. Therefore, an enhanced Inter-Cell Interference Coordination (eICIC) method is required to further optimize the system performance.

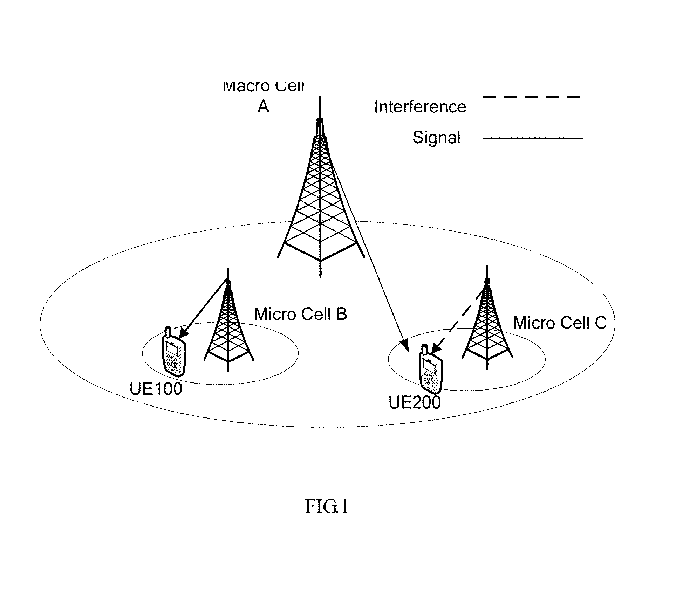

The deployment of the LTE-A system is flexible, which brings difficulty to the inter-cell interference coordination. Fig. 1 schematically illustrates a scenario where a macro cell and micro cells interfere with each other in a communication system. As illustrated in Fig. 1, micro cells B and C serve the user group subscribing thereto, and macro cell A serves all the users. When a user (e.g., user terminal 100) belongs to the user group subscribing to the micro cell, it may switch to the micro cell to be served by the micro base station. When a user (e.g., user terminal 200) does not belong to the user group subscribing to the micro cell, it may be under a strong interference from a channel of the micro cell that occupies the same transmission resource , e.g., an interference of downlink signal from the micro base station. Thus, an interference coordination shall be performed for the micro cell and the macro cell.

In the FDD system, many interference coordination solutions are proposed for the Physical Downlink Control Channel (PDCCH), including the methods of almost empty subframe, MBSFN subframe, symbol translation and uplink pseudo subframe. The core idea of the method of almost empty subframe is to reduce the interference of the downlink subframes on the macro cell by emptying the downlink subframes of the micro cell. But in order to ensure the compatibility with the Rel.8/9 users, the common reference signal (CRS) still needs to be transmitted, which causes an interference on the control channel of the macro cell. The method of MBSFN subframe reduces the interference on the macro cell by using special subframes, wherein the PDCCH of the special subframe is configured to have a small number of OFDM symbols (e.g., one OFDM symbol), and the macro user will not be interfered with on other OFDM symbols. The core idea of the method of symbol translation is to stagger the PDCCH of the macro cell and the control channel of the micro cell through the symbol translation, and meanwhile, the micro cell prohibits scheduling the downlink data channel corresponding to the time-frequency resource of the PDCCH of the macro cell. The core idea of the method of uplink pseudo subframe is to configure the macro cell and the micro cell as different TDD uplink and downlink subframe configurations, and eliminate the interference on the downlink subframes of the macro cell by emptying the uplink subframes of the micro cell, and the CRS will not interfere with the control channel.

The TDD system has seven subframe configurations, as shown in Table 1. In which, D represents downlink subframe, S represents special subframe, and U represents uplink subframe. In which, configurations 0, 1, 2 and 6 have an uplink/downlink switching point cycle of 5 ms, and configurations 3, 4 and 5 have an uplink/downlink switching point cycle of 10 ms. The special subframe includes a downlink portion, a protection portion and an uplink portion, wherein the third OFDM symbol of the downlink portion is used for transmitting the auxiliary synchronization channel, while the uplink portion occupies one or two OFDM symbols for uplink detection and random access, and the uplink detection symbol can only be mapped to the time-frequency resource other than the random access.

**Table 1 Uplink/Downlink Subframe Configuration**

| Uplink/downlink configuration | Uplink/downlink switching point cycle | Subframe index | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

In the process of studying the present invention, the inventor of the present invention finds that under the scenario of macro cell + micro cell, when a user of the macro cell approaches or enters the micro cell, its broadcast channel (PBCH) and synchronization channel (PSS/SSS) will get a strong interference from the micro cell. In order to enable the users of the macro cell to work in an area close to the micro cell, an interference coordination shall be performed for the PDCCH/PBCH/PSS/SSS. But the currently known methods are almost given for individual channels (especially PDCCH), rather than for PDCCH and other channels simultaneously, particularly, there is no interference coordination method for the control, the broadcast channel and the synchronization channel.

To be noted, the above description of the conventional art is just made for the convenience of clearly and completely describing the technical solutions of the present invention, and to facilitate the understanding by a person skilled in the art. It shall not be deemed that the above technical solutions are known to a person skilled in the art just because they are described in the Background section of the present invention.

The literatures cited for the present invention are listed as follows. These literatures are incorporated herein by reference, as if they were completely described herein.
1. [Patent Literature 1]: BHATTAD Kapil, PALANKI Ravei. Synchronous TDM-based communication in dominant interference scenarios (WO 2010006285 A2)
2. [Patent Literature 2]: Gerlach Christian, A method for coordination of the interference in downlink or uplink between cells of radio communication network, a terminal and a radio communication network therefor (WO 2010009999 A1)
3. [Patent Literature 3]: Qin Fei, Zhao Jinbo and Zhu Zhiqu, Interference coordination method and access network device (WO 2010075781 A1)
4. [Patent Literature 4]: Zhifeng Tao, Koon Hoo Teo. Dynamic radio frequency allocation for base station cooperation with interference management (US 20100081441 A1)
5. [Patent Literature 5]: Christian Georg Gerlach, Bernd Haberland, Method for uplink interference coordination on demand basis with cell identification, inter-cell interference detection and downlink measurement, a base station, a mobile terminal and a mobile network therefor (US 20070004423 A1)
6. [Patent Literature 6]: Diao Xinxi, inter-cell interference coordination method and interference coordination information transferring method therefor (CN 101420746A)

### Summary of the Invention

In view of the above problems of the conventional art, the present invention is proposed to solve one or more problems caused by the limitations and disadvantages of the conventional art, or provide at least one beneficial selection.

According to one aspect of the present invention, a micro base station interference coordination method is provided, the method comprising: shifting, relative to subframes in the subframe configuration used in a macro base station, subframes in the subframe configuration used in the micro base station by several subframes, wherein, the number of the shifted subframes causes subframes in the subframe configuration used in the micro base station which are corresponding to a specific channel in the subframe configuration used in the macro base station, not to transmit any signal un-allocatable by the micro base station after the shifting; emptying uplink subframes in the subframe configuration used in the micro base station after the shifting, which are corresponding to downlink subframes containing a designated channel in the subframe configuration used in the macro base station; and emptying the subframes in the subframe configuration used in the micro base station after the shifting which are corresponding to the specific channel in the subframe configuration used in the macro base station, or causing portion of the subframes corresponding to the specific channel not to transmit any signal.

According to another aspect of the present invention, a micro base station is provided, the base station comprising: a shifting unit that shifts, relative to subframes in the subframe configuration used in a macro base station, subframes in the subframe configuration used in the micro base station by several subframes, wherein the number of the shifted subframes causes subframes in the subframe configuration used in the micro base station which are corresponding to a specific channel in the subframe configuration used in the macro base station, not to transmit any signal un-allocatable by the micro base station after the shifting; an uplink subframe emptying unit that empties uplink subframes in the subframe configuration used in the micro base station after the shifting which are corresponding to downlink subframes containing a designated channel in the subframe configuration used in the macro base station; and a scheduling limitation unit that empties the subframes in the subframe configuration used in the micro base station after the shifting which are corresponding to the specific channel in the subframe configuration used in the macro base station, or causes portions of the subframes corresponding to the specific channel not to transmit any signal.

According to another aspect of the present invention, a program readable by a logical component is provided, wherein when being executed by the logical component, the program enables the logical component to implement the aforementioned method, or enables the logical component to serve as the aforementioned micro base station.

According to still another aspect of the present invention, a tangible medium readable by a logical component is provided, which stores the aforementioned program.

According to yet another aspect of the present invention, a user equipment is provided, comprising: a wireless communication unit configured to receive downlink subframes containing a designated channel in the subframe configuration used in a macro base station; wherein a micro base station shifts, relative to subframes in the subframe configuration used in the macro base station, subframes in the subframe configuration used in the micro base station by several subframes, wherein, the number of the shifted subframes causes subframes in the subframe configuration used in the micro base station which are corresponding to a specific channel in the subframe configuration used in the macro base station, not to transmit any signal un-allocatable by the micro base station after the shifting; the micro base station empties uplink subframes in the subframe configuration used in the micro base station after the shifting, which are corresponding to downlink subframes containing the designated channel in the subframe configuration used in the macro base station; and the micro base station empties the subframes in the subframe configuration used in the micro base station after the shifting which are corresponding to the specific channel in the subframe configuration used in the macro base station, or causes portions of the subframes corresponding to the specific channel not to transmit any signal.

In all the conventional methods, the coordination is performed for individual channels. In overall consideration of the interference coordination for multiple channels, the present invention proposes a solution that employs uplink subframes emptying and subframe translation in conjunction for the TDD system. In some embodiments of the present invention, the problem of the interference on the control channel (PDCCH, etc.) and the data channel (PDSCH, etc.) is solved by using the solution of uplink empty subframes (also referred to as pseudo subframe). Since the uplink subframe has no common reference signal (CRS), it solves the problem that the CRS still interferes with the control channel in case of the downlink empty subframe. Meanwhile, in some embodiments of the present invention, the problem of PBCH/PSS/SSS interference is solved through the subframe translation and the scheduling limitation, so as to ensure the normal working of the users of the macro cell under interferences.

### Brief Description of the Drawings

Many aspects of the present invention can be understood better with reference to the following drawings. The parts in the drawings are not drafted in proportion, but just for illustrating the principles of the present invention. For the convenience of illustrating and describing some contents of the present invention, corresponding parts in the drawings may be zoomed in or out. Elements and features described in one drawing or embodiment of the present invention can be combined with elements and features illustrated in one or more other drawings or embodiments. In addition, similar reference signs represent corresponding parts in the drawings, and denote corresponding parts used in more than one embodiment. In the drawings:
Fig. 1 schematically illustrates a scenario where a macro cell and micro cells interfere with each other in a communication system;

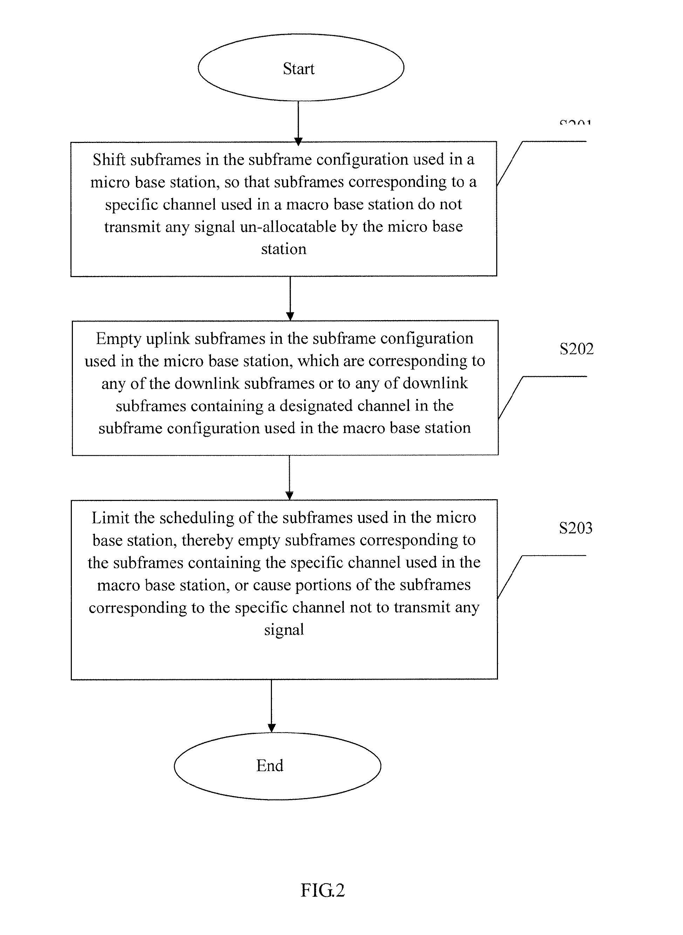

Fig. 2 illustrates a micro base station interference coordination method according to an embodiment of the present invention;

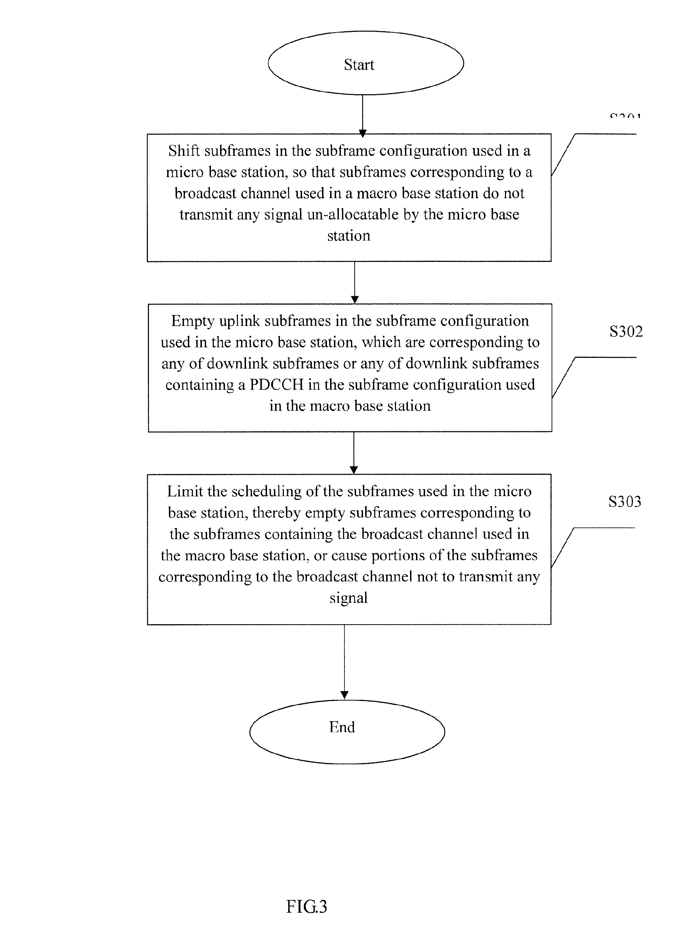

Fig. 3 illustrates a micro base station interference coordination method according to an embodiment of the present invention;

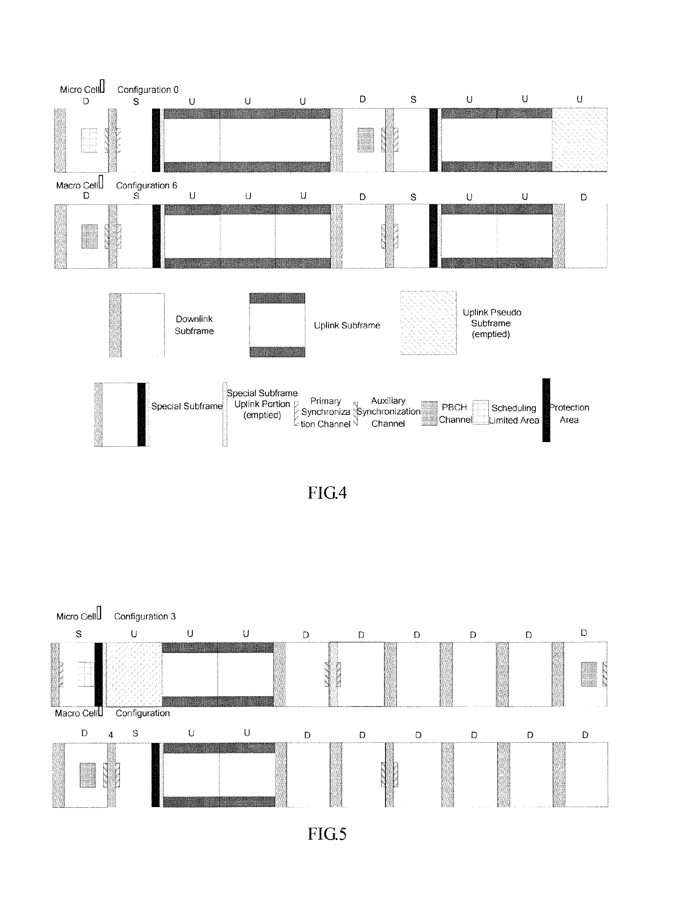

Figs. 4 and 5 give the examples of the micro base station interference coordination according to an embodiment of the present invention as illustrated in Fig. 3;

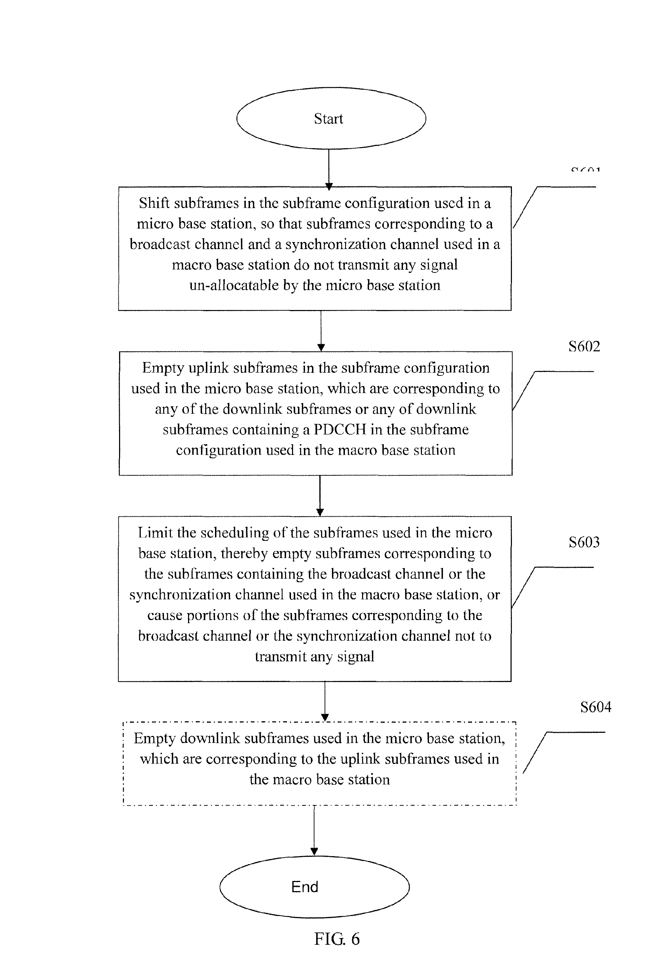

Fig. 6 illustrates a micro base station interference coordination method according to another embodiment of the present invention;

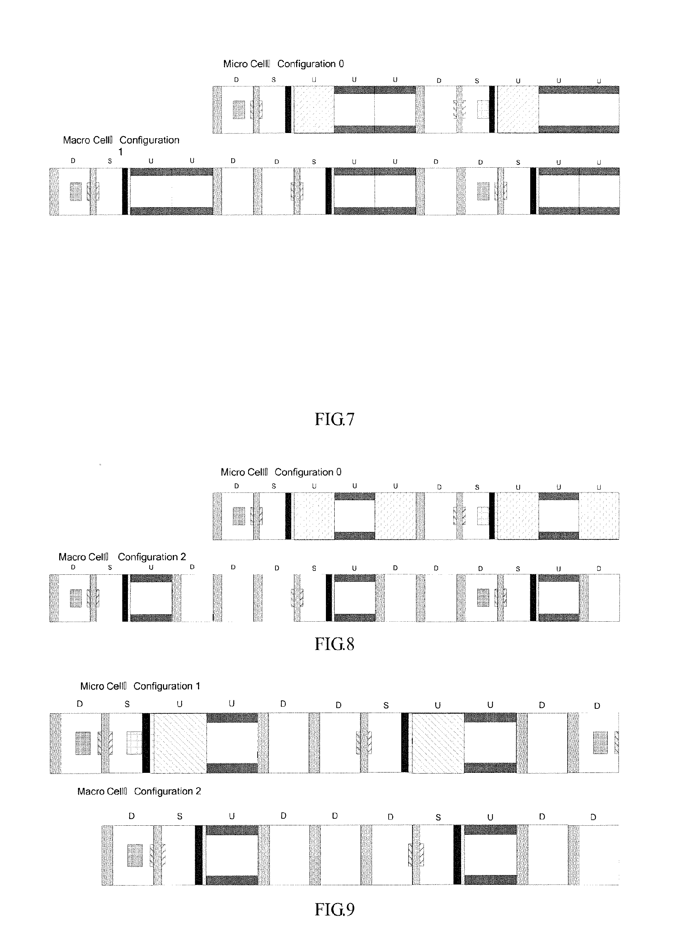

Fig. 7 illustrates a schematic diagram of an interference coordination solution of a micro base station interference coordination method according to an embodiment of the present invention, wherein the micro base station uses subframe configuration 0 and the macro base station uses subframe configuration 1;
Fig. 8 illustrates a schematic diagram of an interference coordination solution of a micro base station interference coordination method according to an embodiment of the present invention, wherein the micro base station uses subframe configuration 0 and the macro base station uses subframe configuration 2;
Fig. 9 illustrates a schematic diagram of an interference coordination solution of a micro base station interference coordination method according to an embodiment of the present invention, wherein the micro base station uses subframe configuration 1 and the macro base station uses subframe configuration 2;

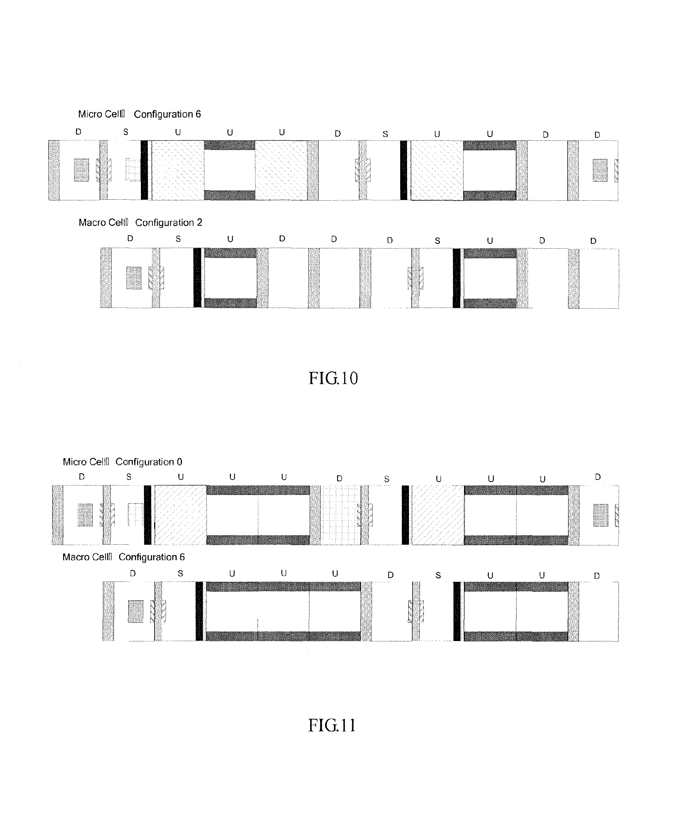

Fig. 10 illustrates a schematic diagram of an interference coordination solution according to the above micro base station interference coordination methods of the present invention, wherein the micro base station uses subframe configuration 6 and the macro base station uses subframe configuration 2;
Fig. 11 illustrates a schematic diagram of an interference coordination solution according to the above micro base station interference coordination methods of the present invention, wherein the micro base station uses subframe configuration 0 and the macro base station uses subframe configuration 6;

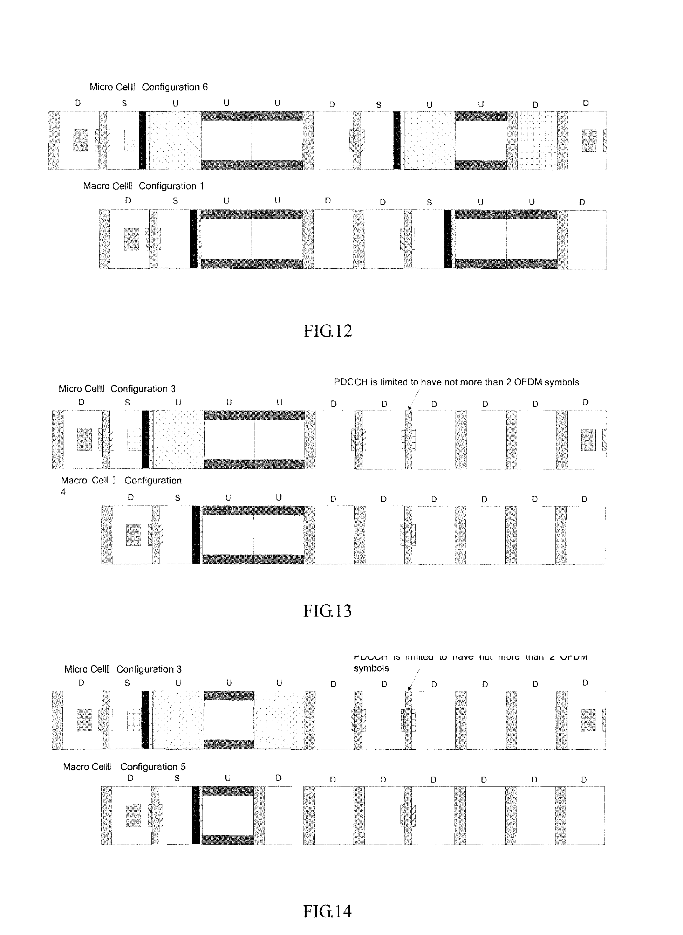

Fig. 12 illustrates a schematic diagram of an interference coordination solution according to the above micro base station interference coordination methods of the present invention, wherein the micro base station uses subframe configuration 6 and the macro base station uses subframe configuration 1;
Fig. 13 illustrates a schematic diagram of an interference coordination solution according to the above micro base station interference coordination methods of the present invention, wherein the micro base station uses subframe configuration 3 and the macro base station uses subframe configuration 4;
Fig. 14 illustrates a schematic diagram of an interference coordination solution according to the above micro base station interference coordination methods of the present invention, wherein the micro base station uses subframe configuration 3 and the macro base station uses subframe configuration 5;

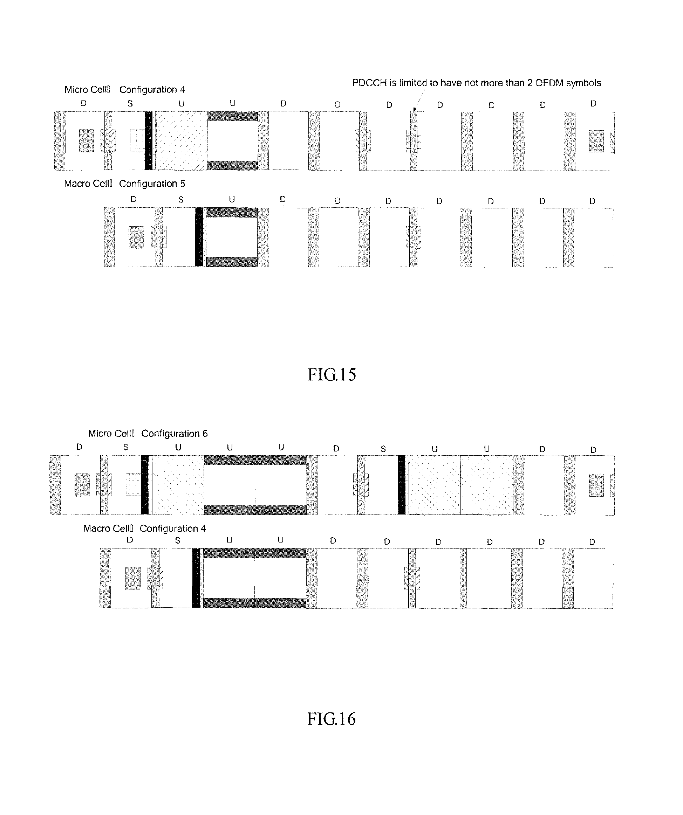

Fig. 15 illustrates a schematic diagram of an interference coordination solution according to the above micro base station interference coordination methods of the present invention, wherein the micro base station uses subframe configuration 4 and the macro base station uses subframe configuration 5;
Fig. 16 illustrates a schematic diagram of an interference coordination solution according to the above micro base station interference coordination methods of the present invention, wherein the micro base station uses subframe configuration 6 and the macro base station uses subframe configuration 4;

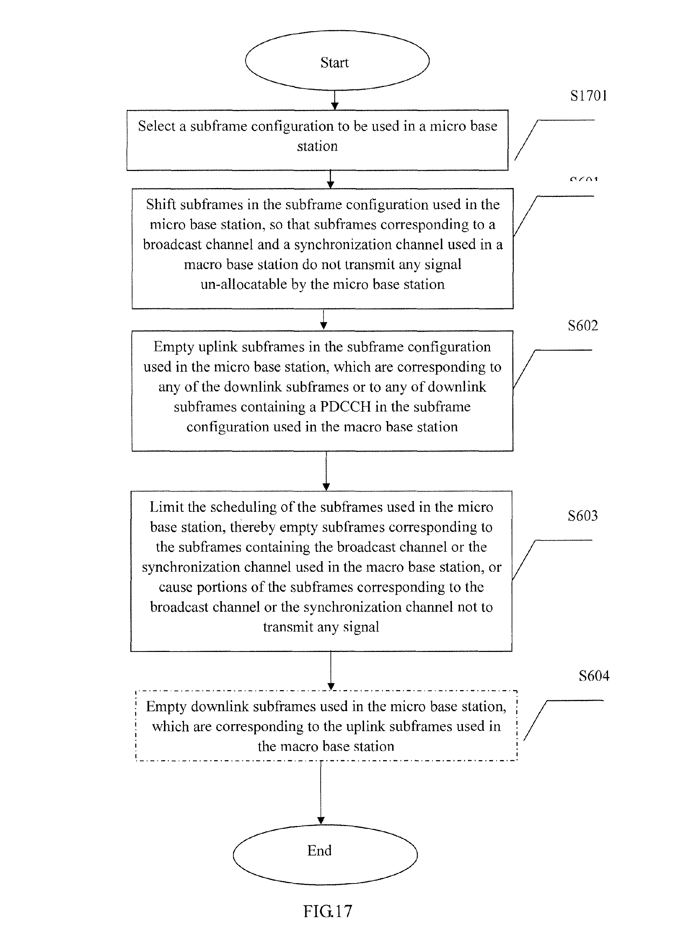

Fig. 17 illustrates a micro base station interference coordination method according to another embodiment of the present invention;

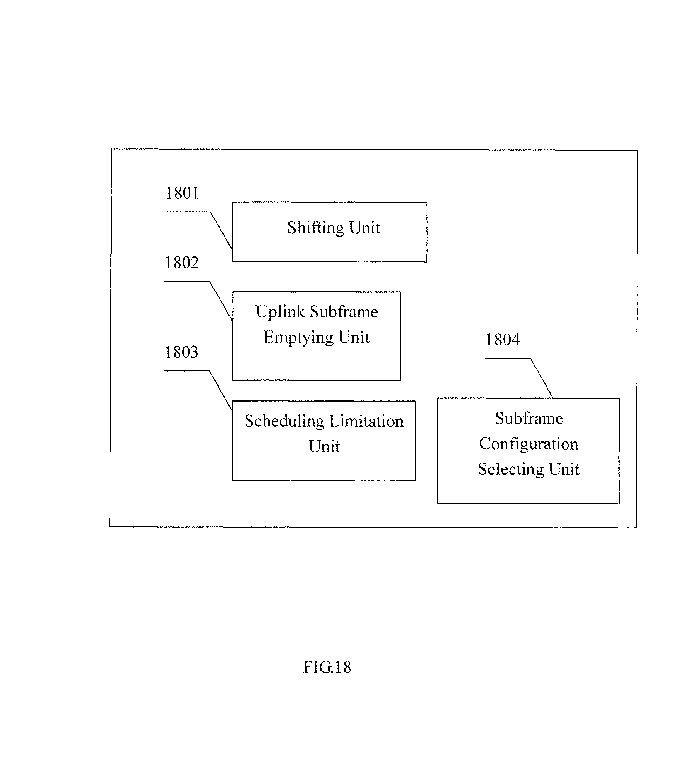

Fig. 18 illustrates a schematic block diagram of a micro base station according to an embodiment of the present invention;

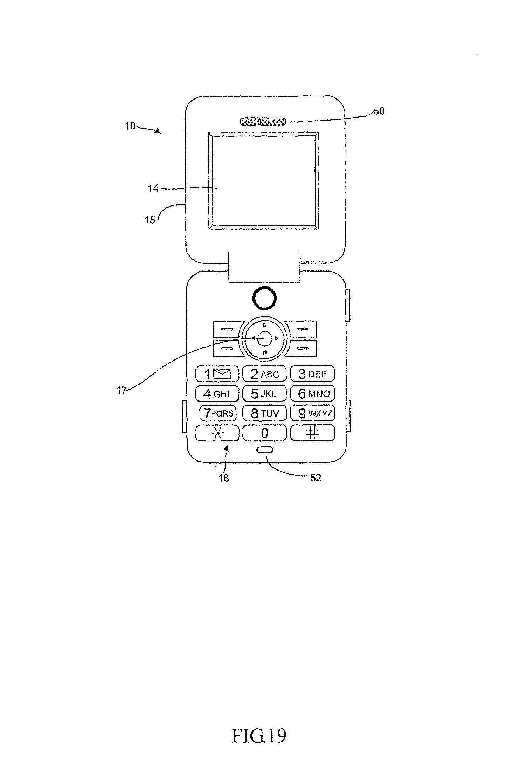

Fig. 19 is a schematic diagram of a mobile phone used as an example of a user equipment according to an embodiment of the present invention; and

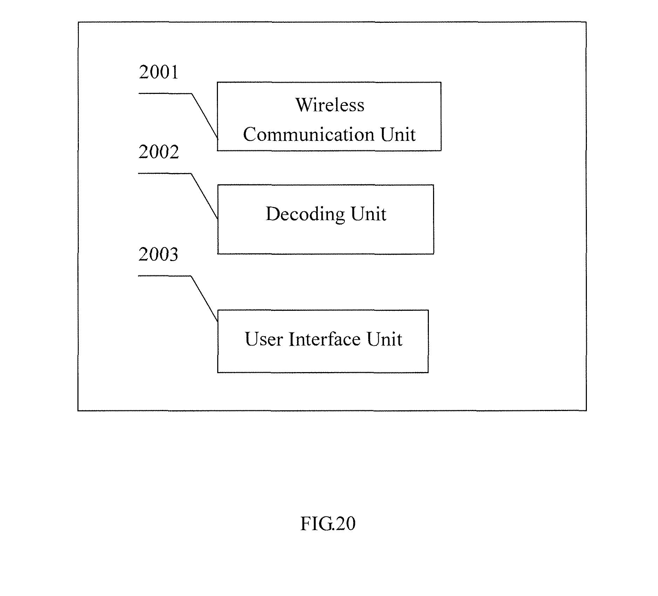

Fig. 20 illustrates a schematic functional block diagram of a user equipment.

### Detailed Description of the Preferred Embodiments

The embodiments of the present invention are detailedly described as follows with reference to the drawings. To be noted, features that are described and/or illustrated with respect to one embodiment may be used in the same way or in a similar way in one or more other embodiments, and in combination with or in substitution of the features of the other embodiments.

It shall be emphasized that the term "comprise/include", "comprising/including" used herein refers to presence of feature, integer, step or component, not excluding existence or addition of one or more other features, integers, steps or components.

The present invention is applicable to the heterogeneous network where a larger cell (macro cell) contains one or more smaller cells (micro cells). The micro cell for example may be a femto cell, a pico cell, etc. A base station used in the micro cell is called as the micro base station, and a base station used in the macro cell is called as the macro base station. The communication system in which the embodiments of the present invention can be applied for example is illustrated in Fig. 1. Fig. 1 is also just exemplary, and for instance, more micro base stations, more macro base stations and more users may be available.

Fig. 2 illustrates a micro base station interference coordination method according to an embodiment of the present invention.

As illustrated in Fig. 2, the micro base station interference coordination method according to the present invention includes: step S201, in which the micro base station shifts, relative to subframes in the subframe configuration used in the macro base station, subframes in the subframe configuration used in the micro base station by several subframes, wherein, the number of the shifted subframes causes subframes in the subframe configuration used in the micro base station which are corresponding to a specific channel in the subframe configuration used in the macro base station, not to transmit any signal un-allocatable by the micro base station after the shifting. The specific channel for example may be broadcast channel, synchronization channel, PDSCH, PHICH, PCFICH, etc.

Generally speaking, the micro base station is always synchronized with the macro base station. Conventionally during the synchronization, subframe 0 in the subframe configuration used in the micro base station is aligned with subframe 0 in the subframe configuration used in the macro base station. When the micro base station shifts, relative to subframes in the subframe configuration used in the macro base station, subframes in the subframe configuration used in the micro base station by several subframes, it means that the micro base station performs an operation such that subframe 0 in the subframe configuration used in the micro base station is no longer aligned with subframe 0 in the subframe configuration used in the macro base station, and a subframe having another serial number in the subframe configuration used in the micro base station is aligned with subframe 0 in the subframe configuration used in the macro base station. For example, when subframes in the subframe configuration used in the micro base station are shifted leftwards by several subframes relative to subframes in the subframe configuration used in the macro base station, subframe 2 in the subframe configuration used in the micro base station is aligned with subframe 0 in the subframe configuration used in the macro base station.

The signal un-allocatable by the micro base station means that during a subframe transmission, according to the protocol used by micro base station, the micro base station cannot determine whether the signal shall be transmitted. For example, according to relevant protocol, in configuration 0, a PDCCH signal is always transmitted in subframe 1, thus the PDCCH signal is a signal un-allocatable by the micro base station.

Next, in step S202, uplink subframes in the subframe configuration used in the micro base station after the shifting, which are corresponding to all or a part of downlink subframes in the subframe configuration used in the macro base station are emptied. In one embodiment, it may empty uplink subframes in the subframe configuration used in the micro base station after the shifting, which are corresponding to downlink subframes containing a designated channel in the subframe configuration used in the macro base station. In another embodiment, it may empty uplink subframes in the subframe configuration used in the micro base station after the shifting, which are corresponding to all the downlink subframes in the subframe configuration used in the macro base station. The designated channel for example may be PDCCH, PDSCH, PHICH, PCFICH, etc.

Emptying uplink subframes (or uplink empty subframes) means that the uplink subframes do not transmit any signal or just transmit very few signals, e.g., only the PUCCH signal (e.g., NACK, ACK, etc.) of format 1 can be transmitted, while PUSCH data or PUCCH signal of format 2 will not be transmitted.

Next, in step S203, the subframes in the subframe configuration used in the micro base station after the shifting which are corresponding to the specific channel in the subframe configuration used in the macro base station are emptied, or portions of the subframes corresponding to the specific channel are caused not to transmit any signal.

The above steps may be performed when the micro base station is started and synchronized with the macro base station, or when the interference coordination is carried out. When the interference coordination is dynamic, the subframe translation may be triggered through a command, and when the interference coordination is semi-static, it may be triggered by a command or a clock of itself when being required. The command may be sent from the macro base station.

Fig. 3 illustrates a micro base station interference coordination method according to an embodiment of the present invention. The method of Fig. 3 is based on the method of Fig. 2 and further refined.

As illustrated in Fig. 3, the micro base station interference coordination method according to the present invention includes: step S301, in which the micro base station shifts, relative to subframes in the subframe configuration used in the macro base station, subframes in the subframe configuration used in the micro base station by several subframes, wherein, the number of the shifted subframes causes subframes in the subframe configuration used in the micro base station which are corresponding to a broadcast channel in the subframe configuration used in the macro base station, not to transmit any signal un-allocatable by the micro base station after the shifting.

Next, in step S302, the micro base station empties uplink subframes in the subframe configuration used in the micro base station after the shifting, which are corresponding to downlink subframes containing a PDCCH in the subframe configuration used in the macro base station, or empty uplink subframes in the subframe configuration used in the micro base station after the shifting, which are corresponding to any of the downlink subframes in the subframe configuration used in the macro base station.

Next, in step S303, the micro base station empties the subframes in the subframe configuration used in the micro base station after the shifting which are corresponding to a broadcast channel in the subframe configuration used in the macro base station, or causes portions of the subframes corresponding to the broadcast channel not to transmit any signal.

Figs. 4 and 5 give the examples of the micro base station interference coordination according to an embodiment of the present invention as illustrated in Fig. 3.

Fig. 4 illustrates a schematic diagram of an interference coordination solution of a micro base station interference coordination method according to an embodiment of the present invention, wherein the micro base station uses subframe configuration 0, while the macro base station uses subframe configuration 6. As illustrated in Fig. 4, subframes in the subframe configuration used in the micro cell leftwards are firstly shifted by 5 subframes; then subframe 4 of the micro cell is emptied to serve as a pseudo subframe to reduce the interference of the micro cell on the PDCCH, PDSCH, PHICH, PCFICH in this subframe of the macro cell; next, the scheduling of the PDSCH resources of portions of subframe 5 in the micro cell overlapped with the PBCH of the macro cell is limited, to solve the problem of interference on the PBCH of the macro cell user.

Fig. 5 illustrates a schematic diagram of an interference coordination solution according to the above micro base station interference coordination methods of the present invention, wherein the micro base station uses subframe configuration 3, while the macro base station uses subframe configuration 4. As illustrated in Fig. 5, subframes in the subframe configuration used in the micro cell are firstly shifted leftwards by 1 subframe; then subframe 2 of the micro cell, which serves as a pseudo subframe is emptied to reduce the interference of the micro cell on the PDCCH, PDSCH, PHICH, PCFICH in this subframe of the macro cell; next, the scheduling of the PDSCH resources of portions of subframe 1 in the micro cell overlapped with the PBCH of the macro cell is limited, to solve the problem of interference on the PBCH of the macro cell user.

According to the embodiment of Fig. 3, the interference on the PBCH of the macro base station can be reduced, and the interference coordination effect can be improved. However, as can be seen from Figs. 4 and 5, according to the embodiment of Fig. 3, the synchronization channel of the macro cell will be interfered with, and the technical effect still needs to be improved.

Fig. 6 illustrates a micro base station interference coordination method according to another embodiment of the present invention. The method of Fig. 6 is based on the method of Fig. 2 and further refined.

As illustrated in Fig. 6, the micro base station interference coordination method according to the present invention includes: step S601, in which the micro base station shifts, relative to subframes in the subframe configuration used in the macro base station, subframes in the subframe configuration used in the micro base station by several subframes, wherein, the number of the shifted subframes causes subframes in the subframe configuration used in the micro base station which are corresponding to a broadcast channel and a synchronization channel in the subframe configuration used in the macro base station, not to transmit any signal un-allocatable by the micro base station after the shifting.

Next, in step S602, uplink subframes in the subframe configuration used in the micro base station after the shifting, which are corresponding to any of downlink subframes containing a PDCCH in the subframe configuration used in the macro base station are emptied, or uplink subframes in the subframe configuration used in the micro base station after the shifting, which are corresponding to any of the downlink subframes in the subframe configuration used in the macro base station are emptied.

Next, in step S603, the subframes in the subframe configuration used in the micro base station after the shifting which are corresponding to the broadcast channel or the synchronization channel in the subframe configuration used in the macro base station are emptied, or portions of the subframes corresponding to the broadcast channel or the synchronization channel are caused not to transmit any signal.

Fig. 7 illustrates a schematic diagram of an interference coordination solution of a micro base station interference coordination method according to the embodiment as illustrated in Fig. 6 of the present invention, wherein the micro base station uses subframe configuration 0 and the macro base station uses subframe configuration 1. As illustrated in Fig. 7, subframes in the subframe configuration used in the micro cell are shifted rightwards by 4 subframes; then subframes 2 and 7 of the micro cell are empty to serve as pseudo subframes to reduce the interference of the micro cell on the PDCCH, PDSCH, PHICH, PCFICH in these subframes of the macro cell; next, the scheduling of the PDSCH resources of portions of subframe 6 in the micro cell overlapped with the PBCH of the macro cell is limited, and meanwhile, the scheduling of the UpPTS area of subframes 1 and 6 in the micro cell is limitted, i.e., making the uplink detection signal and the random access signal not use the UpPTS area. The scheduling limitation may be realized in silence or by punching. The silence means that no data is mapped to the corresponding position, and the punching means removing the mapped data at the corresponding position. In this embodiment, the entire UpPTS area is used as a portion corresponding to the auxiliary synchronization channel.

In another embodiment, it only needs to limit the scheduling of the micro cell, so as not to use the six resource blocks at the frequency center of the UpPTS area of subframes 1 and 6. The method is specifically fro example embodied as follows: 1) reserving a plurality of resources for the PRACHs (each PRACH occupies six resource blocks); and 2) limiting the scheduling of the six resource blocks at the frequency center. That is to say, in this embodiment, the portion in the UpPTS area, which is corresponding to the six resource blocks at the frequency center, serves as a portion corresponding to the auxiliary synchronization channel.

Fig. 8 illustrates a schematic diagram of an interference coordination solution according to the above micro base station interference coordination methods of the present invention, wherein the micro base station uses subframe configuration 0, while the macro base station uses subframe configuration 2. As illustrated in Fig. 8, subframes in the subframe configuration used in the micro cell are firstly shifted rightwards by 4 subframes; then subframes 2, 4, 7 and 9 of the micro cell are emptied to serve as pseudo subframes to reduce the interference of the micro cell on the PDCCH, PDSCH, PHICH, PCFICH in these subframes of the macro cell; next, the scheduling of the PDSCH resources of portions of subframe 6 in the micro cell overlapped with the PBCH of the macro cell is limited, and meanwhile, the scheduling of the micro cell is limited, so as not to use the UpPTS area of subframes 1 and 6, i.e., making the uplink detection signal and the random access signal not use the UpPTS area. Similarly, in another embodiment, it only needs to limit the scheduling of the micro cell, so as not to use the six resource blocks at the frequency center of the UpPTS area of subframes 1 and 6.

Fig. 9 illustrates a schematic diagram of an interference coordination solution according to the above micro base station interference coordination methods of the present invention, wherein the micro base station uses subframe configuration 1 and the macro base station uses subframe configuration 2. As illustrated in Fig. 9, according to the embodiment, subframes in the subframe configuration used in the micro cell are shifted leftwards by 1 subframe; then subframes 2 and 7 of the micro cell are emptied to serve as pseudo subframes to reduce the interference of the micro cell on the PDCCH, PDSCH, PHICH, PCFICH in these subframes of the macro cell; next, the scheduling of the PDSCH resources of portions of subframe 1 in the micro cell overlapped with the PBCH of the macro cell is limited, and meanwhile, the micro cell is configured not to use the UpPTS area of subframes 1 and 6, i.e., making the uplink detection signal and the random access signal not use the UpPTS area. Similarly, in another embodiment, it only needs to limit the scheduling of the micro cell, so as not to use the six resource blocks at the frequency center of the UpPTS area of subframes 1 and 6. The solution solves the problem of the SSS channel interference of the macro cell user.

Fig. 10 illustrates a schematic diagram of an interference coordination solution according to the above micro base station interference coordination methods of the present invention, wherein the micro base station uses subframe configuration 6 and the macro base station uses subframe configuration 2. As illustrated in Fig. 10, the micro base station performs the following operations: 1) shifting subframes in the subframe configuration used in the micro cell leftwards by 1 subframe; 2) emptying subframes 2, 4 and 7 of the micro cell to make them serve as pseudo subframes to reduce the interference of the micro cell on the PDCCH, PDSCH, PHICH, PCFICH in these subframes of the macro cell; and 3) limiting the scheduling of the PDSCH resources of portions of subframe 1 in the micro cell overlapped with the PBCH of the macro cell, and meanwhile, configuring the micro cell not to use the UpPTS area of subframes 1 and 6, i.e., making the uplink detection signal and the random access signal not use the UpPTS area. Similarly, in another embodiment, it only needs to limit the scheduling of the micro cell, so as not to use the six resource blocks at the frequency center of the UpPTS area of subframes 1 and 6. The solution solves the problem of the SSS channel interference of the macro cell user.

Returning to Fig. 6, as illustrated in the dotted box of Fig. 6, according to another embodiment of the present invention, the method of the present invention further includes a step of emptying downlink subframes in the downlink channel of the subframe configuration used in the micro base station, which are corresponding to uplink subframes in the subframe configuration used in the macro base station (step S604).

To be noted, although step S604 is illustrated and described together with the embodiment of Fig. 6, a person skilled in the art shall appreciate that the step may also be used together with the methods as illustrated in Figs. 2 and 3.

Fig. 11 illustrates a schematic diagram of an interference coordination solution according to the above micro base station interference coordination methods of the present invention, wherein the micro base station uses subframe configuration 0 and the macro base station uses subframe configuration 6. As illustrated in Fig. 11, subframes in the subframe configuration used in the micro cell are firstly shifted leftwards by 1 subframe; then subframes 2 and 7 of the micro cell are emptied to serve as pseudo subframes to reduce the interference of the micro cell on the PDCCH, PDSCH, PHICH, PCFICH in these subframes of the macro cell; next, the scheduling of the PDSCH resources of portions of subframe 1 in the micro cell overlapped with the PBCH of the macro cell is limited, and meanwhile, the scheduling of the micro cell is limited, so as not to use the UpPTS area of subframes 1 and 6, i.e., making the uplink detection signal and the random access signal not use the UpPTS area. Similarly, in another embodiment, it only needs to limit the scheduling of the micro cell, so as not to use the six resource blocks at the frequency center of the UpPTS area of subframes 1 and 6. The solution solves the problem of the SSS channel interference of the macro cell user. In addition, the micro base station also empties the PDSCH resource of subframe 5 (downlink subframe), so as to reduce the interference between uplink and downlink of the micro cell and the macro cell. Emptying the downlink subframe means that the downlink subframe does not transmit any signal or just transmit very few signals (e.g., only the CRS signal can be transmitted).

Fig. 12 illustrates a schematic diagram of an interference coordination solution according to the above micro base station interference coordination methods of the present invention, wherein the micro base station uses subframe configuration 6 and the macro base station uses subframe configuration 1. As illustrated in Fig. 12, the following operations are performed: 1) shifting subframes in the subframe configuration used in the micro cell leftwards by 1 subframe; 2) emptying subframes 2 and 7 of the micro cell to serve as pseudo subframes to reduce the interference of the micro cell on the PDCCH, PDSCH, PHICH, PCFICH in these subframes of the macro cell; 3) limiting the scheduling of the PDSCH resources of portions of subframe 1 in the micro cell overlapped with the PBCH of the macro cell, and meanwhile, configuring the micro cell not to use the UpPTS area of subframes 1 and 6, i.e., making the uplink detection signal and the random access signal not use the UpPTS area (similarly, in another embodiment, it only needs to limit the scheduling of the micro cell, so as not to use the six resource blocks at the frequency center of the UpPTS area of subframes 1 and 6); and 4) limiting the scheduling of the PDSCH resource of subframe 8 (downlink subframe), so as to reduce the interference between uplink and downlink of the micro cell and the macro cell.

In addition, according to the embodiment of the present invention, limiting the scheduling of the downlink subframe further includes: in a case where the subframe configuration used in the macro cell and the subframe configuration used in the micro cell both have a switching point cycle of 10 ms, the micro base station limits the PDCCH of the subframe to have two or less OFDMs when the micro cell has downlink subframes corresponding to the downlink subframes containing a PSS channel in the macro cell, so as to ensure a reliable transmission of the PSS channel of the macro cell.

Fig. 13 illustrates a schematic diagram of an interference coordination solution according to the above micro base station interference coordination methods of the present invention, wherein the micro base station uses subframe configuration 3 and the macro base station uses subframe configuration 4. As illustrated in Fig. 13, the micro base station performs the following operations: 1) shifting subframes in the subframe configuration used in the micro cell leftwards by 1 subframe; 2) emptying subframe 2 of the micro cell to make them serve as a pseudo subframe to reduce the interference of the micro cell on the PDCCH, PDSCH, PHICH, PCFICH in this subframe of the macro cell; 3) limiting the scheduling of the PDSCH resources of portions of subframe 1 in the micro cell overlapped with the PBCH of the macro cell, and meanwhile, configuring the micro cell not to use the UpPTS area of subframe 1, i.e., making the uplink detection signal and the random access signal not use the UpPTS area (similarly, in another embodiment, it only needs to limit the scheduling of the micro cell, so as not to use the six resource blocks at the frequency center of the UpPTS area of subframe 1); and 4) configuring the PDCCH of downlink subframe 7 to have not more than two OFDM symbols, and meanwhile, limiting the scheduling of the time-frequency resources in subframes 6 and 7 of the micro cell overlapped with the SSS and PSS channels of the macro cell.

Fig. 14 illustrates a schematic diagram of an interference coordination solution according to the above micro base station interference coordination methods of the present invention, wherein the micro base station uses subframe configuration 3 and the macro base station uses subframe configuration 5. As illustrated in Fig. 14, the micro base station performs the following operations: 1) shifting subframes in the subframe configuration used in the micro cell leftwards by 1 subframe; 2) emptying subframes 2 and 4 of the micro cell to make them serve as pseudo subframes to reduce the interference of the micro cell on the PDCCH, PDSCH, PHICH, PCFICH in these subframes of the macro cell; 3) limiting the scheduling of the PDSCH resources of portions of subframe 1 in the micro cell overlapped with the PBCH of the macro cell, and meanwhile, configuring the micro cell not to use the UpPTS area of subframe 1, i.e., making the uplink detection signal and the random access signal not use the UpPTS area (when the interference from the UpPTS area is tolerable, it only needs to configure the micro cell not to use the six resource blocks at the frequency center of the UpPTS area, so as to solve the problem of the SSS channel interference of the macro cell user); and 4) configuring the PDCCH of downlink subframe 7 to have not more than two OFDM symbols, and meanwhile, limiting the scheduling of the time-frequency resources in subframes 6 and 7 of the micro cell overlapped with the SSS and PSS channels of the macro cell, so as to solve the problem of the SSS and PSS channels interference of the macro cell user.

Fig. 15 illustrates a schematic diagram of an interference coordination solution according to the above micro base station interference coordination methods of the present invention, wherein the micro base station uses subframe configuration 4 and the macro base station uses subframe configuration 5. As illustrated in Fig. 15, the micro base station performs the following operations: 1) shifting subframes in the subframe configuration used in the micro cell leftwards by 1 subframe; 2) emptying subframe 2 of the micro cell to make it serve as a pseudo subframe to reduce the interference of the micro cell on the PDCCH, PDSCH, PHICH, PCFICH in this subframe of the macro cell; 3) limiting the scheduling of the PDSCH resources of portions of subframe 1 in the micro cell overlapped with the PBCH of the macro cell, and meanwhile, configuring the micro cell not to use the UpPTS area of subframe 1, i.e., making the uplink detection signal and the random access signal not use the UpPTS area (similarly, in another embodiment, it only needs to limit the scheduling of the micro cell, so as not to use the six resource blocks at the frequency center of the UpPTS area of subframe 1); and 4) configuring the PDCCH of downlink subframe 7 to have not more than two OFDM symbols, and meanwhile, limiting the scheduling of the time-frequency resources in subframes 6 and 7 of the micro cell overlapped with the SSS and PSS channels of the macro cell.

To be noted, the subframe configurations used by the micro base station and the macro base station are all exemplary, and other subframe configurations may be used.

Fig. 16 illustrates a schematic diagram of an interference coordination solution of a micro base station interference coordination method according to an embodiment of the present invention, wherein the micro base station uses subframe configuration 6 and the macro base station uses subframe configuration 4. As illustrated in Fig. 16, the micro base station performs the following operations: 1) shifting subframes in the subframe configuration used in the micro cell leftwards by 1 subframe; 2) emptying subframes 2, 7 and 8 of the micro cell to make them serve as pseudo subframes to reduce the interference of the micro cell on the PDCCH, PDSCH, PHICH, PCFICH in this subframe of the macro cell; 3) limiting the scheduling of the PDSCH resources of portions of subframe 1 in the micro cell overlapped with the PBCH of the macro cell, and meanwhile, configuring the micro cell not to use the UpPTS area of subframes 1 and 6, i.e., making the uplink detection signal and the random access signal not use the UpPTS area. When the interference from the UpPTS area is tolerable, it only needs to configure the micro cell not to use the six resource blocks at the frequency center, so as to solve the problem of the SSS channel interference of the macro cell user.

In the above description, the scheduling of a part of subframes (corresponding to the PBCH or synchronization channel of the macro cell) of the micro cell corresponding to the PBCH or the synchronization channel of the macro cell is limited. In an alternative embodiment, the scheduling of the whole subframes of the micro cell corresponding to the PBCH or the synchronization channel of the macro cell may be limited, so that they become downlink empty subframes or empty special subframes.

Fig. 17 illustrates a micro base station interference coordination method according to another embodiment of the present invention. As illustrated in Fig. 17, the method is added with step S1701 of subframe configuration selection, compared with the method as illustrated in Fig. 6. In step S1701 of subframe configuration selection, the subframe configuration used in the micro base station may be selected. In one embodiment, the subframe configuration selected by the micro base station has more uplink subframes than the subframe configuration used in the macro base station, preferably, by one or two uplink subframes. In another embodiment, the subframe configuration selected to be used by the micro base station includes three or more uplink subframes.

To be noted, although step S1701 is illustrated and described together with the embodiment of Fig. 6, a person skilled in the art shall appreciate that the step may also be used together with the methods as illustrated in Figs. 2 and 3.

Fig. 18 illustrates a schematic block diagram of a micro base station according to an embodiment of the present invention. As illustrated in Fig. 18, according to one embodiment of the present invention, the micro base station includes a shifting unit 1801, an uplink subframe emptying unit 1802 and a scheduling limitation unit 1803. In another embodiment, the micro base station may further include a subframe configuration selecting unit 1804.

The shifting unit 1801 shifts, relative to subframes in the subframe configuration used in a macro base station, subframes in the subframe configuration used in the micro base station by several subframes, wherein the number of the shifted subframes causes subframes in the subframe configuration used in the micro base station which are corresponding to a specific channel in the subframe configuration used in the macro base station, not to transmit any signal un-allocatable by the micro base station after the shifting. The specific channel for example may be broadcast channel, synchronization channel, PDSCH, PHICH, PCFICH, etc.

The uplink subframe emptying unit 1802 empties uplink subframes in the subframe configuration used in the micro base station after the shifting which are corresponding to all or a part of downlink subframes in the subframe configuration used in the macro base station. In one embodiment, the uplink subframe emptying unit 1802 may empty uplink subframes in the subframe configuration used in the micro base station after the shifting which are corresponding to downlink subframes containing a designated channel in the subframe configuration used in the macro base station. In another embodiment, the uplink subframe emptying unit 1802 may empty uplink subframes in the subframe configuration used in the micro base station after the shifting which are corresponding to any of the downlink subframes in the subframe configuration used in the macro base station. The designated channel for example may be PDCCH, PDSCH, PHICH, PCFICH, etc.

The scheduling limitation unit 1803 empties the subframes in the subframe configuration used in the micro base station after the shifting which are corresponding to the specific channel in the subframe configuration used in the macro base station, or causes portions of the subframes corresponding to the specific channel not to transmit any signal.

The subframe configuration selecting unit 1804 selects a subframe configuration to be used by the micro base station. In one embodiment, the subframe configuration selected by the micro base station has more uplink subframes than the subframe configuration used in the macro base station, preferably, by one or two uplink subframes. In another embodiment, the subframe configuration selected to be used by the micro base station includes three or more uplink subframes.

The above units may be performed when the micro base station is started and synchronized with the macro base station, or when the interference coordination is carried out. When the interference coordination is dynamic, the subframe translation may be triggered through a command, and when the interference coordination is semi-static, it may be triggered by a command or a clock of itself when being required. The command may be sent from the macro base station.

As mentioned above, in one embodiment, the specific channel is a broadcast channel. The number of the shifted subframes causes subframes in the subframe configuration used in the micro base station which are corresponding to the broadcast channel in the subframe configuration used in the macro base station, not to transmit any signal un-allocatable by the micro base station after the shifting. The scheduling limitation unit 1803 empties the subframes in the subframe configuration used in the micro base station after the shifting which are corresponding to the broadcast channel in the subframe configuration used in the macro base station, or causes portions of the subframes corresponding to the broadcast channel not to transmit any signal.

In one embodiment, the specific channel may be a broadcast channel, and a synchronization channel including a primary synchronization channel and an auxiliary synchronization channel. The number of the shifted subframes causes subframes in the subframe configuration used in the micro base station which are corresponding to the broadcast channel and synchronization channel (including the primary synchronization channel and/or the auxiliary synchronization channel) in the subframe configuration used in the macro base station, not to transmit any signal un-allocatable by the micro base station after the shifting. The scheduling limitation unit 1803 empties the subframes in the subframe configuration used in the micro base station after the shifting which are corresponding to the broadcast channel and the synchronization channel in the subframe configuration used in the macro base station, or causes portions of the subframes corresponding to the broadcast channel and the synchronization channel not to transmit any signal.

In another embodiment, the scheduling limitation unit 1803 further empties the uplink subframes in the subframe configuration used in the micro base station after the shifting which are corresponding to the downlink subframes not containing the specific channel in the subframe configuration used in the macro base station.

In another embodiment, the scheduling limitation unit 1803 further empties the downlink subframes in the subframe configuration used in the micro base station after the shifting which are corresponding to the uplink subframes in the subframe configuration used in the macro base station.

The number of the shifted subframes varies with the subframe configuration used in the micro base station and the subframe configuration used in the macro base station.

In another embodiment, the subframe configuration used in the macro base station and the subframe configuration used in the micro base station are both configurations having a switching point cycle of 10 ms. The scheduling limitation unit 1803 limits the PDCCH in the downlink subframe to have two or less OFDM symbols, when a downlink subframe corresponding to downlink subframes containing the synchronization channel in the subframe configuration used in the macro base station exists in the downlink subframes in the subframe configuration used in the micro base station.

To be noted, preferably in the shifting of the present invention, uplink subframes of the micro base station, which are corresponding to subframes 0, 1, 5 and 6 used in the macro base station, shall be as many as possible (e.g., two or more).

The present invention solves the problem of the mutual interference in the heterogeneous network of the TDD system through a method of orthogonal resources division, which solves the problem of PDCCH/PDSCH interference in some subframes by configuring different uplink and downlink subframe modes, and solves the problem of the mutual interference of PBCH/PSS/SSS through a subframe translation. The above solution ensures a reliable communication for the users under strong interferences. The present invention is not only adaptive for the deployment of Macro+Femto, but also can be applied to the deployment of Macro+Pico, and moreover, it is applicable to the TDD wireless communication system such as Wimax.

The present invention proposes an enhanced interference coordination solution for the TDD system. It makes different configurations for the macro cell and the micro cell, and reduces the interference on the downlink subframes of the macro cell user by emptying the uplink subframes of the micro cell, wherein the downlink channel includes PDCCH, PDSCH, PHICH and PCFICH. On the other hand, in order to reduce the interference of the micro cell on the broadcast channel and the synchronization channel of the macro cell, the method of micro cell subframe translation and scheduling limitation is adopted. The micro cell performs corresponding subframe translations according to TDD configurations of the micro cell and the macro cell. This time domain interference coordination method eliminates the PDCCH/PBCH/PSS/SSS interference, and ensures reliable transmissions for macro users near the micro cell.

Fig. 19 is a schematic diagram of a mobile phone used as an example of a user equipment according to an embodiment of the present invention. As illustrated in Fig. 19, the mobile phone 10 may be a flip phone having a cover 15 movable between an open position and a closed position. In Fig. 19, the cover 15 is illustrated as being located at the open position. It shall be appreciated that the mobile phone 10 may be other structure such as a bar phone or a slide phone.

The mobile phone 10 may include a display 14 that displays information such as operating state, time, telephone number, telephone directory, menus, etc. to the user, so that the user can utilize various features of the electronic device 10. The display 14 may be further configured to visually display the content received by the electronic device 10 and/or retrieved from a memory (not illustrated) of the mobile phone 10. The display 14 may be configured to present images, videos and other graphics (e.g., photos, mobile TV programs and game-related videos) to the user.

A keypad 18 provides multiple user input operations. For example, the keypad 18 may include alphanumeric keys that allow alphanumerical information (e.g., telephone number, telephone list, telephone directory, notepad, text, etc.) to be input. In addition, the keypad 18 may include specific function keys 17, such as a "call send" key for initiating or answering a phone call, and a "call end" key for ending or hanging up the phone call. The specific function keys may further include a menu navigation key and a selection key which conveniently perform navigation through menus displayed on the display 14. For example, a pointing device and/or a navigation key may be provided to receive a directional input from the user. In addition, the display 14 and the keypad 18 may be used in combination to realize the soft key function. The mobile phone 10 further includes parts essential for realizing its functions, such as an antenna, a microcontroller, a speaker 50 and a microphone 52.

Fig. 20 illustrates a schematic functional block diagram of a user equipment 10. As illustrated in Fig. 20, the user equipment 10 includes a wireless communication unit 2001 configured to receive downlink subframes containing a designated channel in the subframe configuration used in a macro base station. The user equipment 10 further includes a decoding unit 2002 for example configured to decode the subframes received by the wireless communication unit 2001 from the macro base station. The user equipment 10 further includes a user interface unit 2003 for example configured to provide data decoded by the decoding unit 2002 to the user, such as providing images, videos and texts to the user through the display, or providing voices to the user through the loudspeaker 50. The user interface unit 2003 receives various operation inputs from the user. Obviously, Fig. 20 is just schematic, and the user equipment 10 may include other function modules, which can be implemented with various modules known to a person skilled in the art at present or in the future.

The above apparatus and method of the present invention can be implemented by hardware, or a combination of hardware and software. The present invention relates to such a logic part readable program that enables a logic part to implement the previously described apparatuses or components, or implement the previously described methods and steps, when the program is executed by the logic part. The logic part for example may be field programmable logic part, microprocessor, computer processor, etc. The present invention also relates to storage medium for storing the above program, e.g., hard disk, magnetic disk, optical disk, DVD, flash, magnetic optical disc, memory card, memory stick, etc.

The present invention is described as above in conjunction with the concrete embodiments. But a person skilled in the art shall appreciate that these descriptions are just exemplary, rather than limitations to the protection scope of the present invention. A person skilled in the art can make various modifications and changes to the present invention based on the spirit and the principle of the present invention, and those modifications and changes also fall within the scope of the present invention.

## Claims

1. A micro base station interference coordination method, comprising:
shifting, relative to subframes in the subframe configuration used in a macro base station, subframes in the subframe configuration used in the micro base station by several subframes, wherein, the number of the shifted subframes causes subframes in the subframe configuration used in the micro base station which are corresponding to a specific channel in the subframe configuration used in the macro base station, not to transmit any signal un-allocatable by the micro base station after the shifting;
emptying uplink subframes in the subframe configuration used in the micro base station after the shifting, which are corresponding to downlink subframes containing a designated channel in the subframe configuration used in the macro base station; and
emptying the subframes in the subframe configuration used in the micro base station after the shifting which are corresponding to the specific channel in the subframe configuration used in the macro base station, or causing portions of the subframes corresponding to the specific channel not to transmit any signal.

2. The method according to claim 1, wherein the specific channel is broadcast channel, and the designated channel comprises downlink control channel.

3. The method according to claim 1, wherein the specific channel is broadcast channel and synchronization channel, the synchronization channel comprises primary synchronization channel and auxiliary synchronization channel, and the designated channel comprises downlink control channel.

4. The method according to claim 1, further comprising:
emptying the uplink subframes in the subframe configuration used in the micro base station after the shifting which are corresponding to downlink subframes not containing the specific channel in the subframe configuration used in the macro base station.

5. The method according to claim 1, further comprising:
emptying the downlink subframes in the subframe configuration used in the micro base station after the shifting which are corresponding to the uplink subframes in the subframe configuration used in the macro base station.

6. The method according to claim 1, wherein the subframes in the subframe configuration used in the micro base station are shifted by several subframes relative to the subframes in the subframe configuration used in the macro base station, when the micro base station synchronizes with the macro base station or receives a command from the macro base station, or a specific time is reached.

7. The method according to claim 1, wherein the number of the shifted subframes varies with the subframe configuration used in the micro base station and the subframe configuration used in the macro base station.

8. The method according to claim 1, further comprising selecting a subframe configuration to be used by the micro base station.

9. The method according to claim 8, wherein uplink subframes in the subframe configuration selected by the micro base station are more than the uplink subframes in the subframe configuration used in the macro base station.

10. The method according to claim 9, wherein the uplink subframes in the subframe configuration used in the micro base station are more than the uplink subframes in the subframe configuration used in the macro base station by one or two subframes.

11. The method according to claim 8, wherein the selected subframe configuration to be used by the micro base station comprises three or more uplink subframes.

12. The method according to claim 1, wherein the number of the shifted subframes further causes two or more of subframes 0, 1, 5, 6 in the subframe configuration used in the macro base station to correspond to the uplink subframes in the subframe configuration used in the micro base station after the shifting.

13. The method according to claim 1, wherein the subframe configuration used in the macro base station and the subframe configuration used in the micro base station are both configurations having a switching point cycle of 10 ms, the method further comprising: when a downlink subframe corresponding to the downlink subframe comprising the primary synchronization channel in the subframe configuration used in the macro base station, exists in the downlink subframes in the subframe configuration used in the micro base station, limiting the downlink control channel in the downlink subframe to have two or less OFDM symbols.

14. The method according to claim 2, wherein the subframe configuration used in the macro base station and the subframe configuration used in the micro base station are both configurations having a switching point cycle of 5 ms, and the number of the shifted subframes is 5.

15. A micro base station, comprising:
a shifting unit that shifts, relative to subframes in the subframe configuration used in a macro base station, subframes in the subframe configuration used in the micro base station by several subframes, wherein the number of the shifted subframes causes subframes in the subframe configuration used in the micro base station which are corresponding to a specific channel in the subframe configuration used in the macro base station, not to transmit any signal un-allocatable by the micro base station after the shifting;
an uplink subframe emptying unit that empties uplink subframes in the subframe configuration used in the micro base station after the shifting which are corresponding to downlink subframes containing a designated channel in the subframe configuration used in the macro base station; and
a scheduling limitation unit that empties the subframes in the subframe configuration used in the micro base station after the shifting which are corresponding to the specific channel in the subframe configuration used in the macro base station, or causes portions of the subframes corresponding to the specific channel not to transmit any signal.

16. A program readable by a logical component, wherein when being executed by the logical component, the program enables the logical component to implement the method of claims 1 to 14, or enables the logical component to serve as the micro base station of claim 15 .

17. A tangible medium readable by a logical component, which stores the program of claim 16.

18. A user equipment comprising:
radio communication unit to receive downlink subframes containing a designated channel in a subframe configuration used in a macro base station;
wherein a micro base station shifts, relative to subframes in the subframe configuration used in the macro base station, subframes in the subframe configuration used in the micro base station by several subframes, wherein the number of the shifted subframes causes subframes in the subframe configuration used in the micro base station which are corresponding to a specific channel in the subframe configuration used in the macro base station, not to transmit any signal un-allocatable by the micro base station after the shifting
the micro base station empties uplink subframes in the subframe configuration used in the micro base station after the shifting, which are corresponding to the downlink subframes containing the designated channel in the subframe configuration used in the macro base station: and
the micro base station empties the subframes in the subframe configuration used in the micro base station after the shifting which are corresponding to the specific channel in the subframe configuration used in the macro base station, or causes portions of the subframes corresponding to the specific channel not to transmit any signal.
